# DEMANDE DE BREVET EUROPEEN

(11) **EP 2 405 409 A1**
(43) Date de publication de la demande: **11.01.2012**
(21) Numéro de dépôt: 10305750.1
(22) Date de dépôt: 06.07.2010
(51) Int. Cl.: G07F 7/10

(54) **Dispositif multiprocesseurs autonomes interconnectés, et procédé de personnalisation adapté**

(71) Demandeur: Gemalto SA, 92190 Meudon (FR)
(72) Inventeur: Mouille, Stefane, 13420 Gemenos (FR); Rouchouze, Bruno, 8327 St. Cyr sur mer (FR); Perticara, François, 13112 La Destrousse (FR); Plessis, Patrice, 13780 Cuges les pins (FR)

(57) **Abrégé**

La présente invention concerne un dispositif électronique comportant au moins deux unités de calcul interconnectées, l'une dite « puce maitre », la seconde dite « puce esclave », ladite puce maitre possédant des moyens pour générer des informations de personnalisation, ainsi que des moyens pour personnaliser ladite puce esclave. L'invention concerne également le procédé de personnalisation de la puce esclave, par la puce maitre.

## Description

L'invention concerne la personnalisation électrique des dispositifs électroniques

L'invention porte en particulier sur la personnalisation de deux dispositifs électroniques, embarques dans un même dispositif électronique hôte.

Les dispositifs électroniques mobiles connaissent un essor qui va de pair avec leur miniaturisation. Aujourd'hui des dispositifs électroniques qui tiennent dans la poche, embarquent plus de puissance de calcul qu'un ordinateur de bureau d'il y a quelques années.

Cette évolution conjointe de la miniaturisation des dispositifs et de l'augmentation de leur capacité a permit d'ouvrir de nouveaux horizons en terme d'application.

Aujourd'hui un téléphone portable, ou un baladeur musical, sont capable d'effectuer des opérations cryptographiques, de faire de l'encodage ou du décodage d'information.

Fer de lance de l'évolution des dispositifs électroniques embarqués, les puces électroniques connaissent cette évolution de leur application.

Aujourd'hui des puces électroniques sont embarquées dans un grand nombre de dispositifs. Nous les trouvons bien évidement dans des cartes à puces, mais également dans des documents d'identité électroniques, dans des autocollants intelligents, etc.

De telles puces (aussi appelées couramment « unité de calcul ») offrent des performances de sécurité particulièrement élevées, ce qui a permit d'orienter naturellement leur usage vers des applications sécuritaires, ou tout au moins sécurisées.

Ainsi les puces sont couramment utilisées pour des usages étatiques, bancaires, etc.

Toutes ces applications se basent sur une personnalisation des dites puces, par une entité qui souhaite garantir l'intégrité des données fournies, ainsi que de pouvoir attester de sa propre identité d'autorité de personnalisation. En effet, lorsqu'un gouvernement produit une carte d'identité électronique, il souhaite que ces informations ne puissent être modifies, mais également que chacun sache que cette carte a été produite par ce gouvernement, et ainsi que la crédibilité du gouvernement soit reportée sur les données.

Un problème se pose notamment en termes de protection de la vie privée. En effet, il est fréquent qu'un usager n'ait besoin de certaines informations contenues dans la carte, mais la présentation de ce document entraine quasi systématiquement la production de l'ensemble des données.

Une solution consiste en la production d'une puce ne contenant qu'une partie des informations, mais le souci est dans la personnalisation d'une telle puce. En effet, la contrepartie de ce genre de puce personnalisées par une entité centrale, est qu'il est presque impossible de demander une personnalisation de puce, personnalisée aux besoins de l'utilisateur.

La présente invention tend à résoudre ce problème, en proposant un dispositif multi-puces, associé à un mécanisme de personnalisation d'une de ces puces dite puce esclave, par une autre de ces puces, dite puce maître.

Plus particulièrement, la présente invention consiste, dans un premier temps, en un dispositif électronique comportant au moins deux unités de calcul interconnectées, l'une dite « puce maitre », la seconde dite « puce esclave ». La puce maitre possédant des moyens pour générer au moins une information de personnalisation, ainsi que des moyens pour personnaliser la puce esclave.

Dans un mode d'implémentation de l'invention, chacune des unités de calcul peut posséder des ressources indépendantes. Le terme de ressources s'entend au sens de ressources informatiques, à savoir : mémoire de stockage, mémoire de travail, processeurs, etc.

Chacune des unités de calcul peut posséder sa propre interface de communication vers l'extérieur du dispositif.

Selon le mode d'implémentation, au moins une des interfaces de communication vers l'extérieur du dispositif, peut être une interface de communication à contacts, ou bien sans contact.

Chacune des unités de calcul peut posséder sa propre alimentation en énergie. Si ce n'est pas le cas, la puce maitre, peut posséder des moyens apte à fournir à la puce esclave, l'énergie électrique nécessaire à son fonctionnement, ou bien les unités de calcul peuvent partager une alimentation commune en énergie.

Dans un second temps, la présente invention consiste en un procédé de personnalisation d'une unité de calcul dite « puce esclave », grâce à une seconde unité de calcul dite « puce maitre ». Ce procédé comporte au moins les étapes de :
- authentification mutuelle des deux unités de calcul
- ouverture d'un canal sécurisé entre les deux unités de calcul
- génération éventuelle de données de personnalisation par la puce maitre
- génération d'un masque de personnalisation avec tout ou partie des informations contenues dans la puce maitre, ainsi que les éventuelles de personnalisation
- envoie de ce masque de personnalisation vers la puce esclave.

Selon un mode d'implémentation, les dites unités de calcul peuvent être embarquées dans un même dispositif électronique hôte.

Ce procédé peut comprendre en outre, et préalablement aux autres étapes, une étape au cours de laquelle la puce maitre, fournit à la puce esclave, l'énergie électrique nécessaire à son fonctionnement.

D'autres caractéristiques et avantages de l'invention ressortiront clairement de la description qui en est faite ci-après, à titre indicatif et nullement limitatif, en référence aux dessins annexés dans lesquels :
- La figure 1 illustre une implémentation de l'invention dans une carte a puce à contact, munie de deux puces selon l'invention
- La figure 2 illustre une implémentation de l'invention dans une carte a puce munie de deux puces selon l'invention, l'une à contact, la seconde sans contact.
- La figure 3 illustre une implémentation de l'invention dans un document de type passeport, dans lequel 2 puces sans contact selon l'invention sont embarquées
- La figure 4 illustre un mode de lecture d'un passeport selon la figure 3

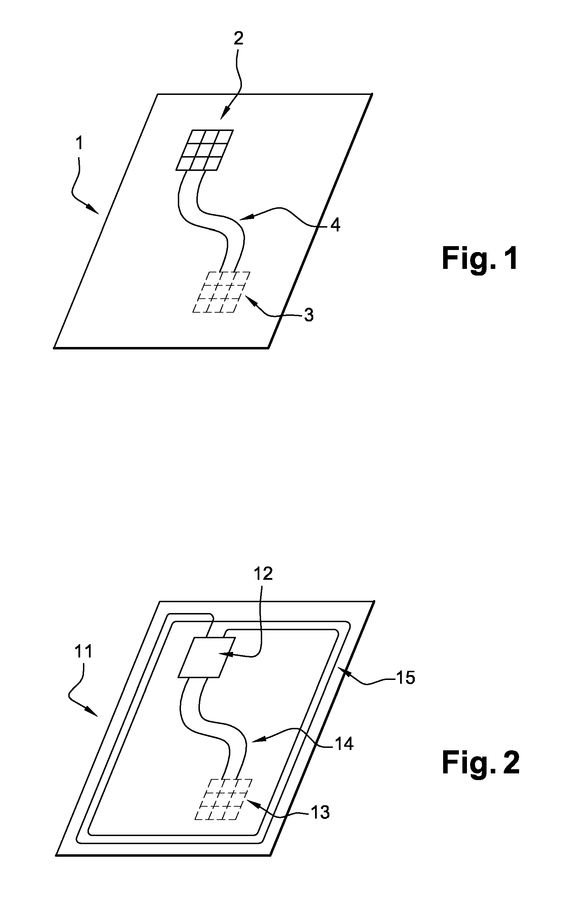

Dans la figure 1, on peut voir une carte d'identité électronique au format carte a puce 1. Selon l'invention, cette carte a puce est munie de deux puces, 2 et 3. Selon l'invention, une de ces deux puces (la puce 2) est une puce maitre, la puce 3 est une puce esclave. La puce 2 a donc été personnalisée par une entité de certification centrale, par exemple ici le service gouvernemental en charge des identités nationales.

La puce 3, en tant que puce esclave, va pouvoir être personnalisée par la puce maitre selon l'invention.

Dans le cas d'usage décrit dans la figure 1, la puce 3 va permettre au porteur de la carte d'identité de générer une identité anonyme certifiée par le gouvernement.

En effet, le gouvernement a personnalisé la puce maitre 2 avec des informations certifiées, et signées par cette autorité gouvernementale, appelée dans ce qui suit « autorité de certification » (AC). Ainsi, lors de la lecture de la puce maitre 2, il est possible de vérifier la présence d'un certificat électronique identifiant formellement le AC, mais également de vérifier que les données présentes sur la puce ont bien été fournies par ce AC.

Dans l'exemple de la figure 1, ces données sont par exemple le nom, le prénom, la date de naissance, l'adresse postale, ainsi que la nationalité du porteur.

Toutefois, le porteur légitime de la carte d'identité 1 peut être amené à présenter cette carte dans des situations pouvant porter atteinte a sa vie privée.

Par exemple le porteur peut être dans des situations ou seules certaines informations sont nécessaires, mais pas leur intégralité. Par exemple pour acheter certains produits (par exemple de l'alcool), il est nécessaire au porteur de prouver sa majorité, mais pas de donner son nom, son adresse. Dans ce cas, la majorité est même différente de la date de naissance. En effet, il n'est pas besoin de connaitre l'âge d'une personne, juste si il est supérieur a dix huit ans (si la majorité est fixée à ce seuil là).

L'invention va ainsi permettre à l'utilisateur de générer une identité virtuelle, dans la puce esclave 3, qui va contenir une partie des informations de la puce maitre 2. Dans le cas d'espèce, uniquement l'âge.

Pour générer cette information dans la puce esclave, la puce maitre va se connecter a la puce esclave au travers de la connexion 4, et avoir, auprès de cette dernière, un rôle d'autorité de certification ACbis.

La puce maitre va donc fournir a la puce esclave des données signées par elle, ainsi que un certificat unique.

Dans un mode préféré d'implémentation de l'invention, la puce maitre dérive son propre certificat ACbis depuis le certificat du AC qu'elle contient. Ainsi il est possible, en vérifiant le certificat et les données de la puce esclave 3, de remonter jusqu'à l'autorité AC, ici le gouvernement.

Dans un mode particulièrement avantageux de l'invention, il est intéressant que la puce esclave, et la puce maitre, aient la même structure de données, afin par exemple de ne pas avoir a modifier les terminaux amenés à lire ces puces. Une telle structure de donnée peut par exemple être composée comme suit :
Nom
Prénom
Date de naissance
Adresse postale
Nationalité

Dans ce cas, la personnalisation de la carte esclave nécessite une complétude de la structure.

La puce maitre doit donc contenir un programme informatique, dit personnaliser, capable de créer une structure virtuelle, avant de l'envoyer a la carte esclave pour la personnaliser.

De manière particulièrement avantageuse, cette structure virtuelle, aussi appelé masque de personnalisation, contient des données authentiques, et des données générées.

Ainsi, dans l'exemple illustré par la figure 1, la puce esclave peut contenir la vraie date de naissance du porteur, sa vraie nationalité, mais un nom différent, un prénom différent, et une adresse différente.

Dans ce cas, le personnaliser va générer un nom, un prénom, une adresse, et reprendre la date de naissance et la nationalité inscrite dans la puce maitre par le AC.

Lors de la personnalisation, les données générées et les données « d'origine » ne sont pas signées de la même façon, afin que le terminal de lecture de la puce esclave puisse, si besoin est, faire la différence.

Afin de pouvoir réaliser la personnalisation selon l'invention, le porteur de la carte doit être en possession d'un lecteur adapté, et d'un programme informatique également adapté. Par exemple le lecteur peut être un lecteur de carte a puce standard, capable de lire la puce maitre. Dans ce cas la, la puce maitre doit pouvoir faire transiter de l'énergie vers la puce esclave, et tous les contacts nécessaires au fonctionnement de la puce esclave doivent être dirigés vers la puce maitre. Ainsi, le lecteur a une fonction de lecteur pour la puce maitre, et la puce maitre a une fonction de lecteur pour la puce esclave.

Un mode de réalisation préféré, s'appuie sur un double lecteur, capable d'activer indépendamment l'une de l'autre, la puce maitre, et la puce esclave.

Une fois les deux puces alimentées, le porteur doit pouvoir le mettre dans un mode « administration ». Dans ce mode particulier, la puce maitre s'apprête à personnaliser, et la puce esclave à être personnalisée. Il est à noter que, dans un mode particulier d'implémentation de l'invention, il est possible de personnaliser plusieurs fois une même puce esclave, une personnalisation effaçant tout simplement la précédente.

Des lors l'utilisateur, au travers d'un programme adéquat, lit les données de la puce maitre, et sélectionne les données à transférer sur la puce esclave.

Selon le mode d'implémentation, les données non sélectionnées peuvent être choisies par l'utilisateur ou bien générées par la puce maitre.

Sur ordre de l'utilisateur, la puce maitre signe les données, leur associe un certificat, et produit ainsi le masque de personnalisation. Ce masque est envoyé a la puce esclave pour personnalisation.

Dans un autre mode d'implémentation, la personnalisation selon l'invention peut être complètement automatisée. Par exemple lors de la première connexion de la puce maitre dans un lecteur adapté, un masque préformaté de personnalisation peut se générer et être transmis à la puce esclave.

Nous sommes par exemple dans le cas ou la puce esclave ne contient QUE la date de naissance du porteur de valide. Cette solution est beaucoup moins souple.

Afin d'être en accord avec les besoins de sécurité des applications qui généralement utilisent le type de dispositif selon l'invention, la personnalisation de la puce esclave par la puce maitre peut avantageusement comporter des étapes de sécurisation.

Ces étapes peuvent comporter par exemple l'authentification mutuelle des deux puces, et l'établissement d'un canal sécurisé préalable à la personnalisation proprement dite.

L'authentification mutuelle est basée sur le principe par lequel, chacune des parties vérifie l'authenticité de son ou de ses interlocuteurs. Dans le cas illustré ici, la puce maitre doit pouvoir vérifier l'authenticité de la puce esclave, et la puce esclave vérifier l'authenticité de la puce maitre.

Ce mécanisme croisé permet de se prémunir de nombreux actes de malveillance, notamment la personnalisation d'une puce esclave a partir d'une puce maitre non autorisée. Un autre acte de malveillance peut consister en la personnalisation, par un puce maitre valide, d'une puce esclave invalide. Ce dernier cas permettrait a un attaquant de récupérer des données signées, et un certificat, et de les utiliser sans autorisation.

Cette authentification mutuelle peut avantageusement se faire avec les méthodes bien connues de l'homme de l'art, notamment l'usage de cryptographie a clef privée (PKI).

L'établissement d'un canal sécurisé entre les deux puces fait généralement suite à l'authentification mutuelle. Généralement cet établissement se fait par l'échange, lors de l'authentification mutuelle, d'informations permettant à chacune des puces d'établir une clef de session commune. Cette clef de session peut être utilisée pour chiffrer les échanges entre les puces, et ainsi définir ce qui est couramment appelé un canal sécurisé.

L'établissement d'un tel canal peut avantageusement se faire avec les méthodes bien connues de l'homme de l'art, notamment l'usage de cryptographie symétrique, ou a clef secrète (SK).

Un mode particulier de l'invention peut comporter plusieurs puces esclaves. Ainsi, lors de la personnalisation, il est nécessaire de choisir avant tout la puce esclave à personnaliser, avant d'effecteur les opérations décrites ci-dessus.

La présente invention est particulièrement adaptée a tous les types de communication, voire aux types mixtes de communication. Dans la figure 2, nous pouvons voir une carte a puce 11, munie selon l'invention, d'une puce sans contact 12, et d'une puce a contact 33. La puce sans contact est reliée à une antenne 15, les deux puces étant reliées par une liaison filaire 14.

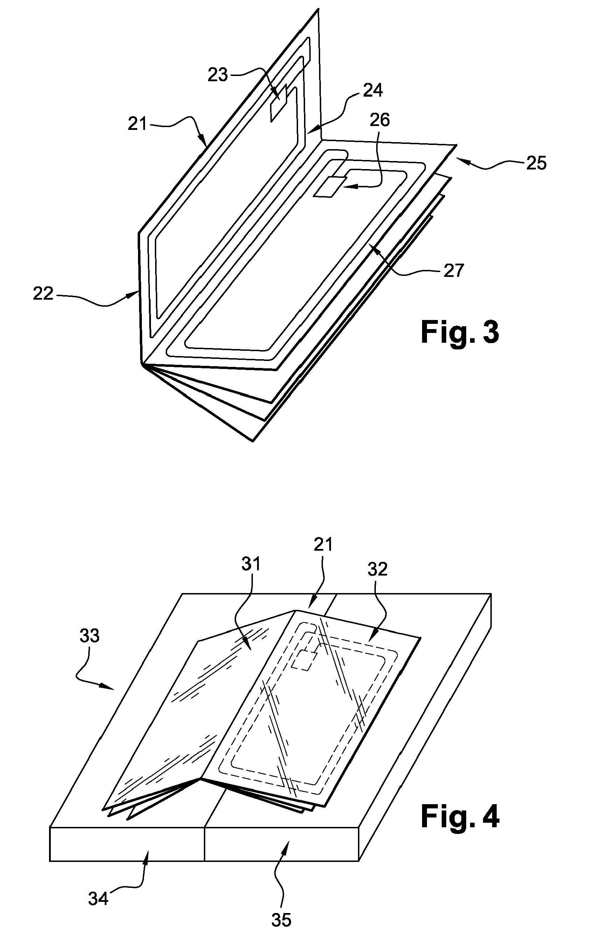

La figure 3 illustre un mode particulièrement intéressant d'implémentation de l'invention : le cas ou la puce maitre et la puce esclave sont reliées par une communication sans contact. En effet la figure 3 illustre un passeport électronique 21, muni d'une puce sans contact maitre 23 dans la couverture 22, avec son antenne 24. Une page 25 du passeport 21 contient un visa électronique muni d'une puce 26 et d'une antenne 27.

Dans ce mode de fonctionnement, les deux puces 23 et 26 n'ont pas de lien filaire, mais peuvent être en contact par une communication radio fréquence.

Ainsi, lors de la personnalisation d'un tel passeport, un douanier appose sur ledit passeport 22 un visa électronique. Ensuite, le passeport est par exemple ouvert en grand de manière a avoir la couverture et ledit visa chacun sur un des cotes, 31 et 32, du passeport. Le passeport ainsi ouvert est déposé sur un lecteur double 33, muni de deux lecteur 34 et 35, chacun pouvant ainsi lire une des deux puces.

Dans ce mode d'implémentation, le contact entre les deux puces peut se faire au travers du lecteur, qui relaie les informations envoyées. Ainsi, le masque de personnalisation est transmis par la puce maitre au lecteur 34, qui le transmet au lecteur 35, qui le transmet a la puce esclave.

Dans un autre mode de réalisation, le passeport est déposé dans un champ radiofréquence unique, qui active la puce maitre, et la puce maitre fait office de lecteur auprès de la puce esclave.

## Revendications

1. Dispositif électronique (1, 11, 21) comportant au moins deux unités de calcul (2, 3, 12, 13, 23, 26) interconnectées (4, 14), l'une dite « puce maitre », la seconde dite « puce esclave »,
**caractérisé en ce que** ladite puce maitre possède des moyens pour générer au moins une information de personnalisation, ainsi que des moyens pour personnaliser ladite puce esclave.

2. Dispositif électronique selon la revendication 1, **caractérisé en ce que** chacune des dites unités de calcul possède des ressources indépendantes.

3. Dispositif électronique selon la revendication 1 **caractérisé en ce que** chacune des dites unités de calcul possède sa propre interface de communication vers l'extérieur dudit dispositif.

4. Dispositif électronique selon la revendication 3 **caractérisé en ce que** au moins une des dites interfaces de communication vers l'extérieur dudit dispositif, est une interface de communication à contacts.

5. Dispositif électronique selon la revendication 3 **caractérisé en ce que** au moins une des dites interfaces de communication vers l'extérieur dudit dispositif, est une interface de communication sans contact.

6. Dispositif électronique selon la revendication 1 **caractérisé en ce que** chacune des dites unités de calcul possède sa propre alimentation en énergie.

7. Dispositif électronique selon la revendication 6 **caractérisé en ce que** ladite puce maitre, possède des moyens apte à fournir à ladite puce esclave, l'énergie électrique nécessaire a son fonctionnement.

8. Dispositif électronique selon la revendication 1 **caractérisé en ce que** chacune les dites unités de calcul partagent une alimentation commune en énergie.

9. Procédé de personnalisation d'une unité de calcul dite « puce esclave », grâce à une seconde unité de calcul dite « puce maitre »,
**caractérisé en ce que** il comporte au moins les étapes de
- authentification mutuelle des deux puces
- ouverture d'un canal sécurisé entre les deux puces
- génération éventuelle de données de personnalisation par ladite puce maitre
- génération d'un masque de personnalisation avec tout ou partie des informations contenues dans ladite puce maitre, ainsi que les éventuelles de personnalisation
- envoie dudit masque de personnalisation vers ladite puce esclave.

10. Procédé de personnalisation d'une unité de calcul dite « puce esclave », grâce à une seconde unité de calcul dite « puce maitre », **caractérisé en ce que** les dites unités de calcul sont embarquées dans un même dispositif électronique hôte.

11. Procédé selon l'une des revendications 9 ou 10, **caractérisé en ce qu'**il comprend en outre, et préalablement aux autres étapes, une étape au cours de laquelle ladite puce maitre, fournit à ladite puce esclave, l'énergie électrique nécessaire à son fonctionnement.
